# EUROPEAN PATENT APPLICATION

(11) **EP 0 903 211 A2**
(43) Date of publication of application: **24.03.1999**
(21) Application number: 98117452.7
(22) Date of filing: 15.09.1998
(51) Int. Cl.: B29B 7/76, B05B 15/02

(54) **Self-cleaning gun for delivering a polyurethane foamed material**

(30) Priority: 19.09.1997 IT MI972136
(71) Applicant: Rigo S.r.l., 21057 Olgiate Olona (Varese) (IT)
(72) Inventor: Rigolio, Riccardo, 21052 Busto Arsizio (Varese) (IT)
(74) Representative: Cicogna, Franco

(57) **Abstract**

The invention relates to a self-cleaning gun (1) for delivering a water or other liquid mixed foamed polyurethane material, of the type comprising a movable rod (10) which can be manually operated through a lever (4). The rod (10) is hollow and a water or other liquid flow as supplied from a first vessel is caused to pass therethrough, said rod (10) being coaxially arranged inside a duct (20) therethrough the polyurethane material, as supplied from a second vessel, flows. The main feature of the invention is that the gun comprises a flexible material small pipe (5), having an inlet arranged at a level lower than that of the water or other liquid supplying vessel in said rod and fluidly communicating therewith. The outlet of said small pipe (5) is arranged at an insert element, coaxially arranged on the outside of the rod (10), and which can be manually caused to slide along the rod (10) to a position thereat it will provide a fluid communication with the rod (10) inside, to allow water or other liquid required for cleaning the gun injectors to pass through.

## Description

### BACKGROUND OF THE INVENTION

The present invention relates to a self-cleaning gun for delivering a water or other liquid mixed polyurethane foamed material.

As is known, foamed polyurethane, in the presence of water or other liquids, is subjected to a polymerizing or curing reaction, causing it to quickly cure.

Delivery guns for delivering polyurethane foams or the like, together with water or other liquids, to provide the above mentioned polymerizing reaction, are already known in the prior art.

These delivering guns conventionally comprise a water or other liquid holding first vessel and a polyurethane holding second vessel.

Said guns comprise furthermore a barrel including a rod therein, extending coaxial to the barrel, and which can be manually driven through a lever allowing the rod to be longitudinally displaced.

The rod is hollow and water or other liquids supplied from said first vessel are caused to flow therethrough; said rod is also provided with a hole having an axis perpendicular to the rod longitudinal axis, and designed for allowing said rod, as it is longitudinally driven, to fluidly communicate with said water or other liquid vessel.

Thus, since the rod is coaxially arranged inside the mentioned barrel, it will provide an annular duct therethrough the polyurethane material flows.

On the end free portion of the gun barrel a nozzle element is provided, for allowing the polyurethane to be mixed with water or other suitable liquid, to provide the mentioned polyurethane polymerizing or curing reaction, for providing a cured polyurethane material.

The above disclosed prior automatic delivery guns, however, have the drawback that they are clogged as they remain unused even for a comparatively short time period.

### SUMMARY OF THE INVENTION

Accordingly, the aim of the present invention is to provide a delivery duct for delivering a polyurethane foamed material, which is adapted to always hold in a well clean condition the water or liquid duct, thereby delivering foamed polyurethane materials, even after long non use periods.

Within the scope of the above mentioned aim, a main object of the present invention is to provide such a foamed polyurethane material delivery gun which is adapted to homogeneously moisten the polyurethane material.

The above mentioned aim and objects are achieved by the present invention, which provides a self-cleaning gun for delivering a water or other liquid mixed foamed polyurethane material, of the type comprising a movable rod, which can be manually operated through a lever, said rod being hollow to allow a water or other liquid flow supplied from a first vessel to pass therethrough, and being coaxially arranged in a duct therethrough a polyurethane material supplied from a second vessel flows, said gun being characterized in that it further comprises means for allowing water or a cleaning liquid to clean an outlet nozzle of said gun to freely pass through said rod.

According to a preferred embodiment of the present invention, the means for allowing water or other cleaning liquid to freely pass through said rod comprise a flexible material small tube, having an inlet arranged at a level lower than that of the water or cleaning liquid supplying vessel, thereby fluidly communicating with said liquid vessel.

Said means for allowing water or other cleaning liquid to freely pass through said rod comprise moreover a valve insert, coaxially arranged on the outside of said rod, and which can be manually slidably driven along said rod, and being provided with a fitting for engaging the small tube water or liquid outlet, said insert being adapted to be slidably driven from a first position in which it does not fluidly communicate with the hollow of said rod to a second position in which it fluidly communicates with the hollow inside of said rod.

According to a further preferred embodiment of the invention, the valve insert is provided with a gap, coaxially provided on the outside of said rod and provided, at the two end portions thereof with at least an O-ring, said O-ring having such a length that it allows, as said valve insert is arranged in said second position thereof, a fluid communication with the hollow inside of said rod, through a pair of holes provided through said rod.

According to a further preferred embodiment of the invention, the gun comprises moreover a delivery nozzle, including in its inside a block element, said block element having a substantially triangular cross-section with angles formed by circle arch portions and being provided with longitudinal slots allowing to atomize the cleaning water or liquid in order to homogeneously moisten or wet the polyurethane foamed material.

### BRIEF DESCRIPTION OF THE DRAWINGS

Further characteristics and advantages of the present invention will become more apparent hereinafter, from the following detailed disclosure, given by way of an illustrative but not limitative example, with reference to the accompanying drawings, where:

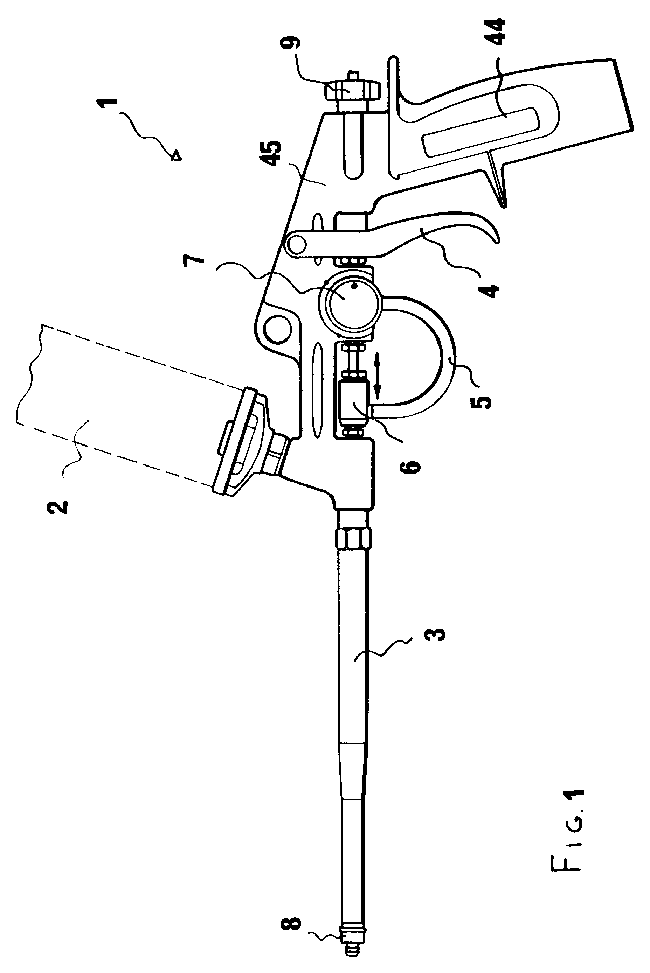

Figure 1 is a side view of a self-cleaning gun according to the present invention;
Figure 2 is a cross-sectional side view of the self-cleaning gun of Figure 1;

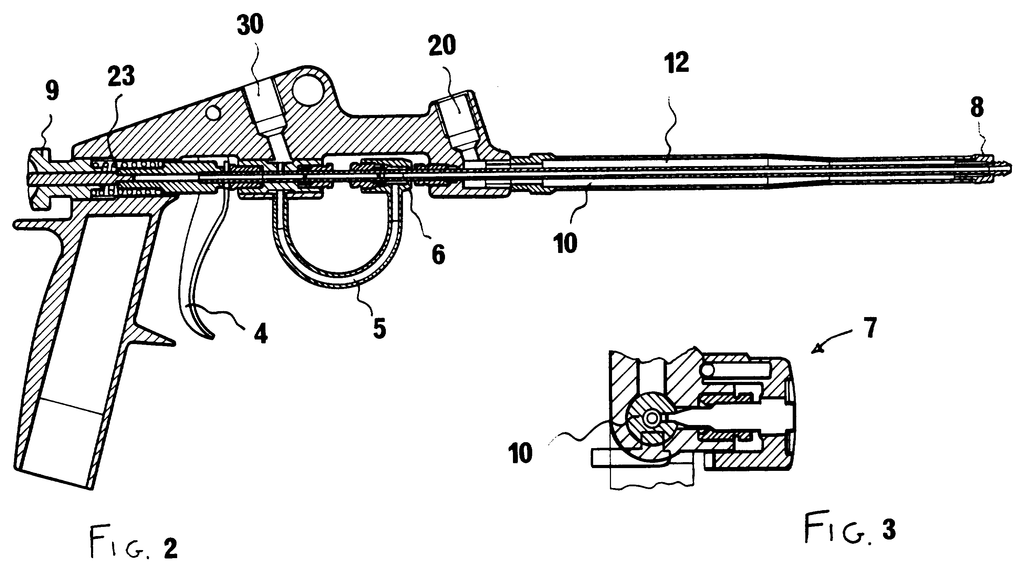

Figure 3 is a cross-sectional view illustrating an adjusting element applied to the self-cleaning gun for adjusting the water or other cleaning liquid amount;

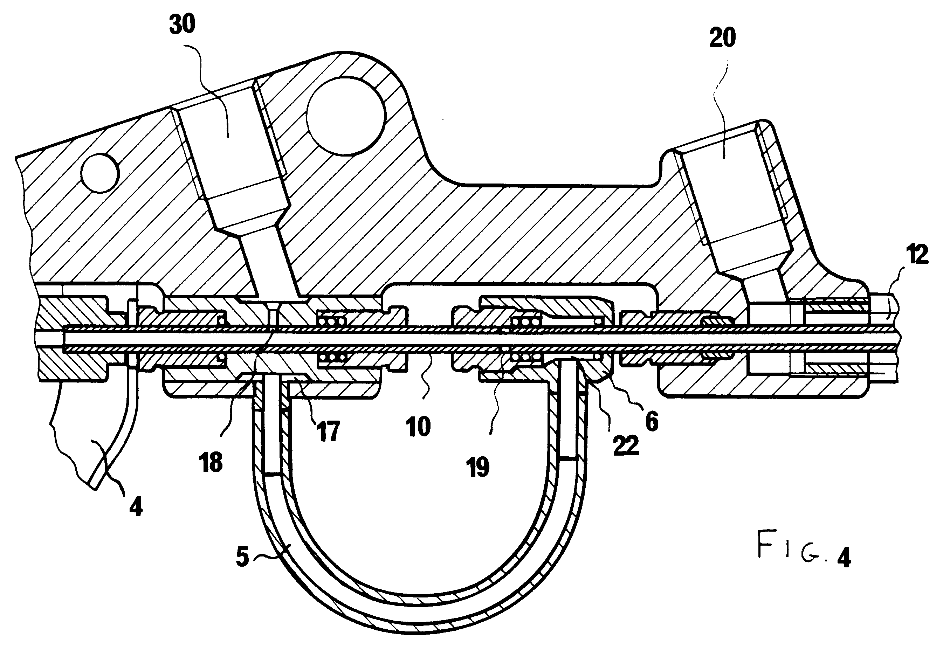

Figure 4 is a further cross-sectional view illustrating the system or means for allowing water or cleaning liquid to freely flow, in order to properly clean the atomizing element; and
Figures 5-8 illustrates component elements of the mentioned atomizing nozzle.

### DESCRIPTION OF THE PREFERRED EMBODIMENTS

In the following disclosure reference will be made to a preferred embodiment of the present invention, which is illustrated by way of a not limitative example of possible variations of the invention.

The self-cleaning gun according to the invention, generally indicated by the reference number 1, comprises a gun handle 44 and a gun body 45 housing therein a gun barrel 3.

On the top of the gun body 45 are arranged both a polyurethane material vessel 2 and a water or cleaning liquid vessel (not shown for simplicity).

Said vessels, by means of suitable fittings, of known types, cause the polyurethane material and water or other cleaning liquid to be conveyed respectively through the conveying ducts 20 and 30.

More specifically, the water or cleaning liquid is conveyed through the hollow rod 10, whereas the polyurethane material is conveyed through the duct 12 arranged coaxially on the outside of the rod 10, to the atomizing or delivery nozzle 8.

In order to provide a fluid connection between the water or liquid vessel and the hollow inside of the rod 10, it is necessary to slightly withdraw or rearwardly displace the rod 10 by manually operating the lever 4, to bring the hole 18 of the rod to register with the duct 30.

Thus, the water or cleaning liquid will enter, through the duct 30, the rod 10 and will arrive at the atomizing element 46: in this connection it should be pointed out that the amount of water or cleaning liquid supplied to the rod can be adjusted by the adjusting element 7.

Simultaneously, the polyurethane foamed material, supplied through the duct 20 will enter the small tube 10 and will flow toward the front portion thereof, so as to be mixed with the water or cleaning liquid outside of the atomizing element 46, since the withdrawn rod 10 will allow the polyurethane material to freely exit the nozzle 8.

The withdrawn or moving back movement of the rod 10 and, accordingly, the opening degree of the nozzle 8, can be adjusted by an adjusting spring 23, the length of which can be controlled by a rear screw 9.

The subject delivery gun is moreover provided with a valve assembly 6, including an annular gap 22 delimited, at the two end portions thereof, by an O-ring.

As the valve assembly 6 is rearwardly driven or withdrawn, it will allow water or cleaning liquid to freely pass through the rod 10, thereby cleaning the atomizing element 46.

In fact, as shown, said valve assembly 6 is coupled to the water or cleaning liquid vessel through a flexible small tube 5 which, in turn, fluidly communicates with the water or cleaning liquid vessel through the mentioned annular gap 17.

During a normal operation of the delivery gun 1, the valve assembly 6 will be rigid with the rod 10, and it will be arranged in a first position preventing any fluid coupling susceptible to allow water or cleaning liquid exiting the small tube 5 to enter the rod 10.

However, as stated, said valve assembly 6 can be manually withdrawn, to be brought to a second position in which the annular gap 22 will be registered with the holes 19 formed through the rod 10.

Thus, water or cleaning liquid are allowed to freely pass through the rod 10 thereby properly cleaning the atomizing element 46.

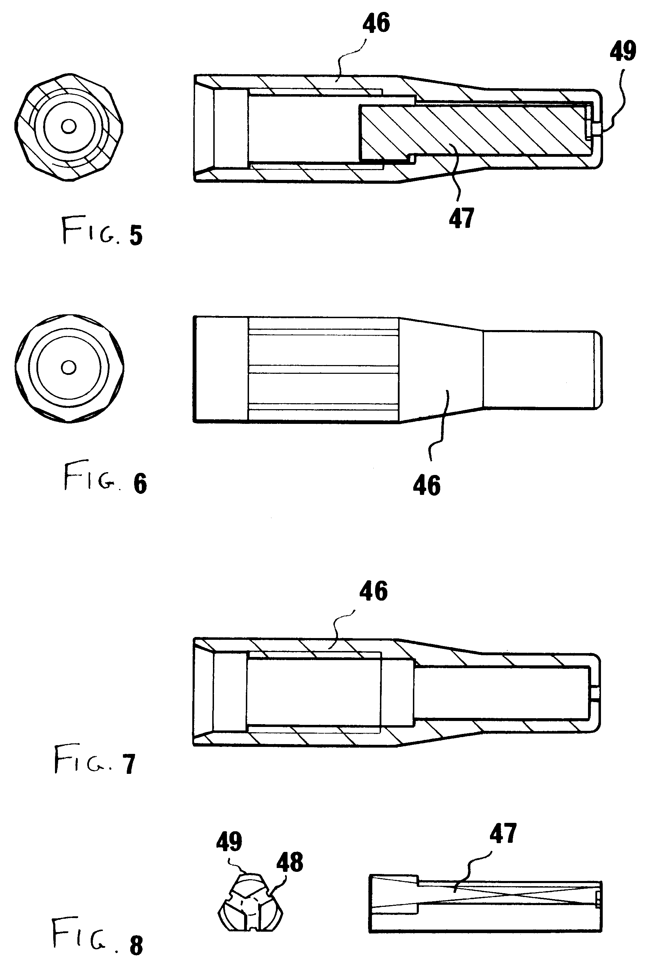

As shown in Figures 5-8 of the accompanying drawings, inside the cleaning element 46 is provided a small block element 47, having a substantially triangular cross-section, with angles constituted by circle arch portions 49, and being provided with longitudinal slots 48, to properly atomize water or cleaning liquid to homogeneously moisten the polyurethane foamed material.

As shown, the small block 47 is arranged inside the atomizing element 46 which is provided with an outside tapering and two different diameter inner portions, the less diameter portion ending with a used water or cleaning liquid outlet hole 49.

Said small block 47 is just arranged inside said less diameter portion, said block being moreover provided with an enlarged end portion in turn engaging the greater diameter portion of the atomizing element 46.

## Claims

1. A self-cleaning gun for delivering a water or other liquid mixed polyurethane foamed material, of the type comprising a movable rod and manually operated through a lever, said rod being hollow to allow a water or liquid flow supplied from a first vessel to pass therethrough, and being coaxially arranged inside a duct therethrough a polyurethane material supplied from a second vessel is caused to pass, characterized in that said self-cleaning gun comprises moreover means for allowing water or cleaning liquid for cleaning an outlet nozzle of said gun to freely pass through said rod.

2. A-self cleaning gun for delivering a water or other liquid mixed polyurethane foamed material, according to Claim 1, characterized in that said means for allowing water or liquid to freely pass to said rod comprise a flexible material small tube, having an inlet arranged at a level lower than that of the water or liquid supplying vessel, thereby fluidly communicating with said vessel.

3. A-self cleaning gun for delivering a water or other liquid mixed polyurethane foamed material, according to Claim 2, characterized in that said means for allowing water or liquid to freely pass to said rod comprise a valve insert, coaxially arranged on the outside of said rod, which can be manually slidably driven along said rod and being provided with a fitting for engaging therein the water or liquid outlet of said small tube, said insert being adapted to be slidably driven from a first position in which it does not fluidly communicate with the hollow of said rod to a second position in which it fluidly communicates with said hollow inside of said rod.

4. A-self cleaning gun for delivering a water or other liquid mixed polyurethane foamed material, according to Claim 3, characterized in that said valve insert is provided with a gap coaxial with the outside of said rod and delimited, at the two end portions thereof, by at least an O-ring, having such a length that it allows, as said valve insert is arranged at said second position thereof, a fluid communication with said hollow inside of said rod, through a pair of holes provided through said rod.

5. A-self cleaning gun for delivering a water or other liquid mixed polyurethane foamed material, according to one or more the preceding claims, characterized in that the manual operation of said lever, by causing said rod to withdraw, allows said foamed polyurethane material to pass through said duct coaxial with said rod to be mixed with said rod or cleaning liquid outside of said outlet nozzle.

6. A-self cleaning gun for delivering a water or other liquid mixed polyurethane foamed material, according to Claim 5, characterized in that said gun comprises moreover a nozzle including therein a block element having a substantially triangular cross section with angles formed by circle arch portions and provided with longitudinal slot allowing said water or cleaning liquid to be atomized thereby homogeneously moisten said polyurethane foamed material.

7. A-self cleaning gun for delivering a water or other liquid mixed polyurethane foamed material, according to one or more the preceding claims, characterized in that said gun comprises moreover a manually adjustable valve to adjust the used low of said water or cleaning liquid.

8. A-self cleaning gun for delivering a water or other liquid mixed polyurethane foamed material, according to one or more the preceding claims, characterized in that said gun comprises moreover a spring the length of which can be adjusted by a screw to control the displacement of said rod, thereby controlling the maximum opening of said outlet nozzle, depending on the polyurethane amount to be delivered.
